# FASCICULE DE BREVET EUROPEEN

(11) **EP 1 263 107 B1**
(45) Date de publication et mention de la délivrance du brevet: **14.04.2004**
(21) Numéro de dépôt: 02291275.2
(22) Date de dépôt: 24.05.2002
(51) Int. Cl.: H02G 15/18

(54) **Dispositif de maintien en expansion d'un manchon élastique**
Vorrichtung zum Halten einer elastischen Muffe in aufgeweitetem Zustand
Device for holding an elastic sleeve in an expanded state

(30) Priorité: 29.05.2001 FR 0106978
(43) Date de publication de la demande: 04.12.2002
(73) Titulaire: Sagem S.A., 75015 Paris (FR)
(72) Inventeur: Sanchez, Patrick, 75013 Paris (FR); Zen, Lino, 75013 Paris (FR)
(74) Mandataire: Fruchard, Guy

(56) Documents cités:
- FR-A- 2 786 954

## Description

L'invention concerne un dispositif de maintien en expansion d'un manchon élastique.

On connaît, par exemple du document FR-2 786 954, un dispositif de maintien selon le préambule de la revendication 1 comportant un organe de maintien disposé à l'intérieur d'un manchon et formé par deux éléments tubulaires coniques rigides coaxiaux maintenus en position à l'intérieur du manchon par un organe de verrouillage.

Pour poser le manchon sur une jonction de câble ou une extrémité de câble, le dispositif est enfilé sur le câble puis amené à l'endroit de pose du manchon. L'organe de verrouillage solidarisant les deux éléments tubulaires est alors retiré, puis l'un des deux éléments tubulaires rigides est extrait de l'intérieur du manchon de façon à appliquer une moitié de manchon sur le câble. L'autre élément tubulaire rigide est extrait pour appliquer l'autre moitié du manchon sur le câble.

Afin de faciliter un glissement des organes de maintien par rapport au manchon, une couche de graisse est généralement interposée entre le manchon et l'organe de maintien. Toutefois, lorsque le manchon est stocké pendant une période prolongée, la graisse est progressivement refoulée sur une partie au moins de la longueur du manchon et celui-ci tend alors à adhérer aux éléments tubulaires rigides le supportant. Dans ce cas, il est difficile de positionner le manchon de façon précise. En effet, l'opérateur doit retenir d'une main une partie du manchon toujours expansé sur l'un des éléments tubulaires rigides, tandis qu'il exerce une traction sur l'autre élément tubulaire pour l'extraire de l'intérieur du manchon.

Lors de cet effort de traction, le manchon risque d'être décalé par l'opérateur pendant l'extraction du premier élément tubulaire rigide, et une fois celui-ci retiré, il est difficile de repositionner le manchon sur le câble.

Un but de l'invention est de proposer un dispositif de maintien en expansion d'un manchon élastique permettant un positionnement du manchon après une longue période de stockage.

A cet effet on propose, conformément à l'invention selon la revendication 1, un dispositif de maintien en expansion d'un manchon élastique, comportant un organe de maintien disposé à l'intérieur du manchon et formé par deux éléments tubulaires rigides coaxiaux entre lesquels est disposé un organe d'entretoisement tubulaire amovible par l'intérieur d'au moins un des éléments rigides.

Ainsi, lors de la pose du manchon, l'opérateur commence par retirer l'organe d'entretoisement, ce qui a pour effet d'appliquer la partie centrale du manchon qui recouvrait l'organe d'entretoisement sur la partie de câble en regard. La partie centrale du manchon enserre alors le câble et immobilise le manchon sur ce dernier, tout en exerçant sur les extrémités internes des éléments tubulaires rigides une force qui tend à chasser ceux-ci hors du manchon élastique. Le retrait des éléments tubulaires rigides peut alors s'effectuer sans risque de déplacement du manchon.

Dans le cas d'un organe d'entretoisement de faible longueur, il est même possible avant le retrait des éléments tubulaires rigides de déplacer le dispositif pour positionner précisément le manchon sur le câble, l'effort de serrage de la partie centrale du manchon sur le câble étant limité et pouvant être vaincu par un effort volontaire de l'opérateur sur le dispositif.

Selon un mode préféré de réalisation de l'invention, l'organe d'entretoisement tubulaire comporte une bande en hélice dont une portion d'extrémité s'étend à l'intérieur d'un des éléments tubulaires rigides et chaque élément tubulaire est recouvert d'un film replié à l'intérieur de l'élément tubulaire correspondant et relié à des organes de tension s'étendant à l'extérieur du manchon élastique.

D'autres caractéristiques et avantages de l'invention apparaîtront à la lumière de la description qui suit d'un mode de réalisation particulier non limitatif de l'invention en référence aux figures annexées parmi lesquelles :
- la figure 1 est une vue en coupe axiale d'un manchon élastique maintenu dans un état expansé par un premier mode de réalisation du dispositif de maintien selon l'invention ;
- la figure 2 est une vue en coupe axiale analogue à celle de la figure 1 pendant la pose du manchon sur une jonction de câbles ;
- la figure 3 est une vue partielle agrandie de l'encadré A de la figure 2 ;
- la figure 4 est une vue analogue à celle de la figure 1 d'un second mode de réalisation de l'invention en coupe selon la ligne IV-IV de la figure 5 ;
- la figure 5 est une vue en coupe agrandie selon la ligne V-V de la figure 4.

Sur les figures, les épaisseurs respectives des différents éléments constituant le dispositif selon l'invention n'ont pas été respectées pour une meilleure clarté des dessins.

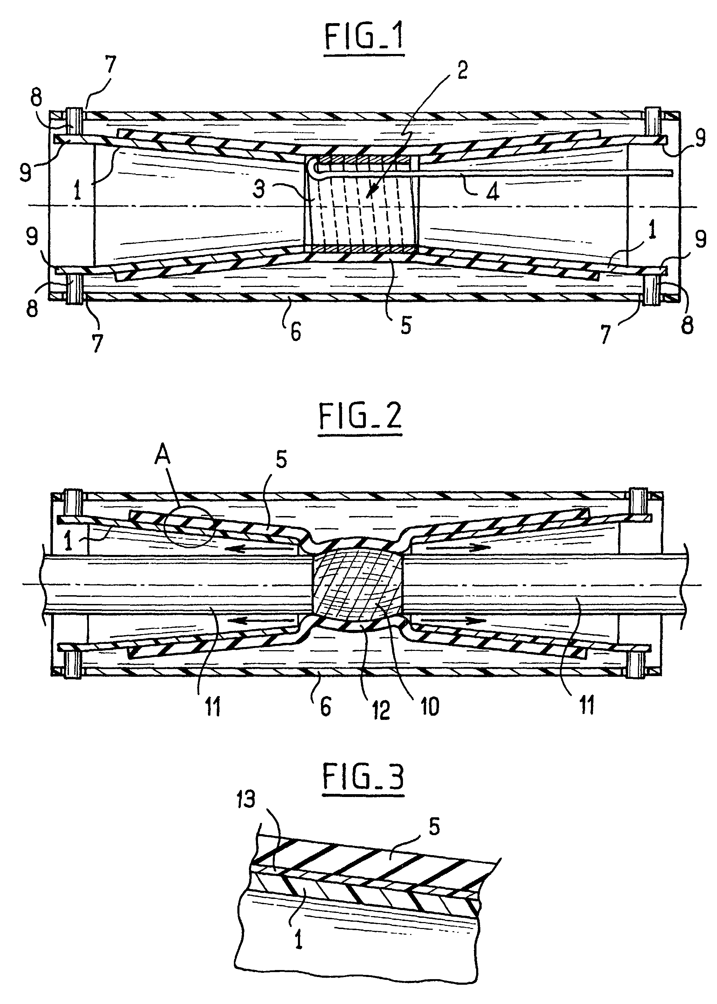

En référence à la figure 1, le dispositif de maintien en expansion selon l'invention comporte deux cônes 1 creux et rigides. Les cônes 1 ont des extrémités internes espacées l'une de l'autre et un organe d'entretoisement tubulaire 2 est disposé entre les extrémités internes des cônes 1. L'organe d'entretoisement 2 est ici formé de façon connue en soi d'un tronçon de tube comprenant des perforations en hélice délimitant une bande 3 dont une extrémité 4 s'étend à l'intérieur du tube 2 et peut être tirée pour extraire progressivement le tube par l'intérieur en déroulant la bande 3 au fur et à mesure que la matière restant entre les perforations est rompue. Selon l'invention, l'extrémité 4 de la bande 3 formant le tube 2 s'étend en outre à l'intérieur de l'un des cônes 1.

Les cônes 1 et l'organe d'entretoisement 2 sont coaxiaux, la conicité des cônes 1 étant tournée vers l'organe d'entretoisement 2.

Un manchon élastique 5 est monté en expansion sur les cônes 1 et l'organe d'entretoisement 2 qui forment ensemble un organe de maintien du manchon dans un état expansé. La façon de mettre en place le manchon élastique 5 autour de l'organe de maintien n'est pas décrite ici, mais est par exemple similaire à celle décrite dans le document FR-2 786 954.

Un tube de verrouillage 6 est disposé autour de l'ensemble et comprend à ses extrémités des orifices 7 pour la réception d'ergots 8 solidaires chacun d'une patte flexible 9 saillant d'un des cônes 1. Le tube de verrouillage 6 assure la stabilité du dispositif en empêchant la séparation des cônes 1 sous l'effet de la poussée du manchon sur leur surface extérieure.

Lors de la mise en place du manchon élastique 5 sur une jonction 10 entre deux câbles électriques 11, l'ensemble est tout d'abord enfilé sur l'un des câbles 11, puis après réalisation de la jonction 10, l'ensemble est ramené au dessus de la jonction. Tout en maintenant le dispositif en position d'une main, l'opérateur tire sur l'extrémité 4 de la bande 3 de façon à dérouler celle-ci et enlever progressivement l'organe d'entretoisement 2.

Ainsi que cela est illustré à la figure 2, l'enlèvement de l'organe d'entretoisement 2 libère la partie centrale 11 du manchon élastique 5 qui, sous l'effet de son élasticité, vient enserrer la partie en regard de la jonction 10. Le manchon élastique 5 est ainsi immobilisé par rapport à la jonction 10 et la partie rétractée 12 du manchon élastique 5 prend appui sur les extrémités internes des cônes 1 et tend à repousser ceux-ci vers l'extérieur comme indiqué par les flèches en traits épais à la figure 2.

Cependant, la surface de contact du manchon élastique 5 avec la jonction 10 est limitée à la partie centrale 12 du manchon élastique 5, de sorte que l'effort de frottement et de serrage entre le manchon élastique 5 et le câble 10 est suffisamment faible pour permettre un déplacement volontaire du dispositif par l'opérateur si celui-ci s'aperçoit à la suite du retrait de l'organe d'entretoisement 2 que le manchon élastique 5 est mal positionné par rapport à la jonction 10. Le tube de verrouillage étant toujours en position, l'ensemble est déplacé en bloc.

Puis l'opérateur enlève le tube de verrouillage 6 en faisant fléchir les pattes 9 pour faire sortir les ergots 8 des orifices 7 du tube de verrouillage 6, et extrait les cônes 1, de sorte que le manchon élastique 5 s'applique sur la totalité de la jonction 10. Aucun mouvement du manchon élastique 5 n'est à craindre lors de l'enlèvement des cônes 1, du fait que le manchon élastique 5 est immobilisé par sa partie centrale 12 sur la jonction 10.

En vue de faciliter l'extraction des cônes 1, leur surface extérieure est de préférence recouverte d'un film 13 (figure 3). Le film 13 peut par exemple être obtenu par application de graisse, ou encore résulter d'un traitement de surface des cônes 1. Le matériau constitutif du film 13 présente un faible coefficient de frottement avec le matériau du manchon élastique 5. La conicité de la surface extérieure des cônes 1 alliée à la présence du film 13 favorise le glissement du manchon élastique 5 des cônes 1 lors de leur extraction.

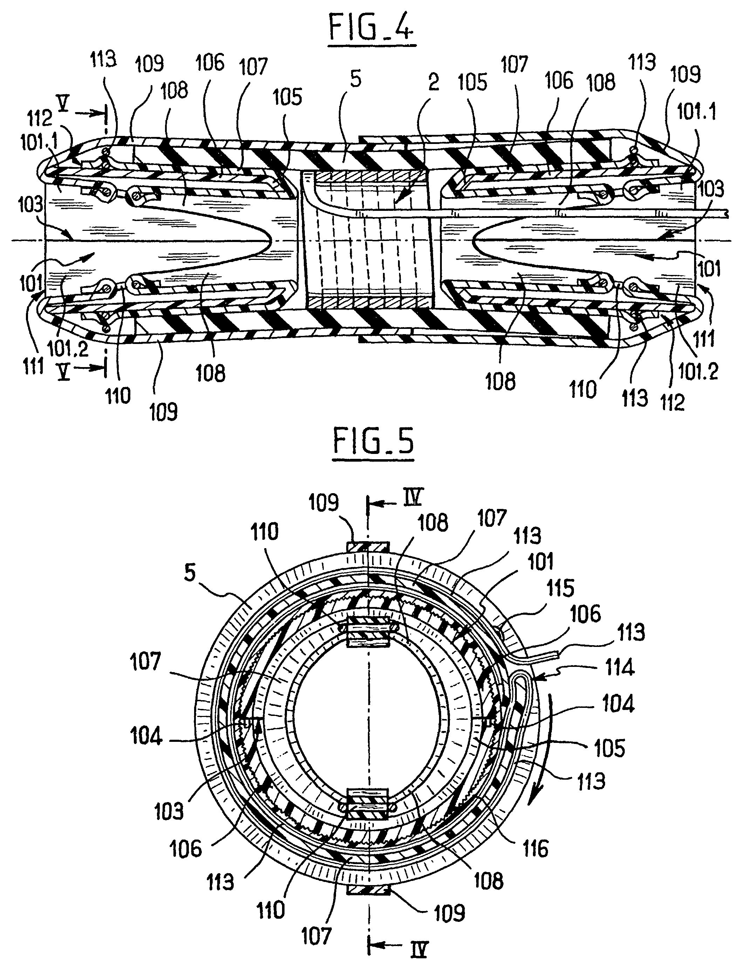

En référence aux figures 4 et 5 sur lesquelles les composants identiques portent la même référence numérique, le dispositif selon le second mode de réalisation de l'invention comporte deux éléments tubulaires rigides 101 coaxiaux. Comme précédemment un organe d'entretoisement tubulaire 2 est disposé entre les extrémités internes des éléments tubulaires 101. Chaque élément tubulaire 101 comporte deux demi-coquilles 101.1 et 101.2 qui sont de préférence solidarisées l'une de l'autre le long d'un bord rectiligne 103 par exemple par des picots 104 ou par un assemblage en rainure et languette. Les demi-coquilles formant chaque élément tubulaire 101 sont par exemple moulées en polyéthylène téréphtalate ou en propylène chargé de talc et sont réalisées avec une surface externe rugueuse, par exemple en effectuant un sablage des parois correspondantes du moule.

Chaque élément tubulaire 101 comprend une partie avant 105 de forte conicité par exemple dont la paroi forme avec l'axe un angle compris entre 10° et 70°, de préférence 50° environ, et une partie arrière 106 de faible conicité, c'est-à-dire inférieure à 10° et de préférence inférieure à 1°

Un film 107 recouvre la surface externe de chaque élément tubulaire 101 avec un léger chevauchement des bords longitudinaux du film (voir figure 5). Le film 107 est replié sur lui-même le long du bord interne de l'élément tubulaire 101 et est découpé pour former deux bandes 108 diamétralement opposées qui sont chacune fixée à un organe de tension, ici une bande auto-agrippante 109 reliée au ruban 108 par une boucle 110 et s'étendant à l'extérieur du manchon 5 en prenant appui sur le bord externe 111 de l'élément tubulaire 101. Les bandes auto-agrippantes 109 d'un élément tubulaire 101 sont respectivement reliées aux bandes correspondantes de l'autre élément, par exemple en utilisant des bandes à bouclettes sur un élément et des bandes à crochets sur l'élément tubulaire opposé. Le film 107 est fixé le long de son bord externe 112, par exemple par collage sur l'élément tubulaire ou au moyen d'un ruban adhésif à cheval sur le bord de fixation 112. Un organe de déchirement du film est monté adjacent au bord de déchirement 112. Dans le mode de réalisation illustré l'organe de déchirement comprend un filin 113 qui est enroulé sous le film 107 selon un tour et comporte un point de rebroussement 114 à cheval sur un bord longitudinal du film 107. Le filin 113 est en outre enroulé à l'extérieur du film 107 en passant sous les bandes de tension 109 et est légèrement fixé au voisinage de son extrémité externe, par exemple par un point de colle 115. Une amorce de rupture est de préférence réalisée dans le bord du film en regard du point de rebroussement 114.

Un élément 116 (voir figure 5) est interposé entre la surface externe rugueuse de chaque élément tubulaire 101 et le film 107 qui la recouvre. Cet élément lubrifiant peut être obtenu par un traitement de surface du film 107, au moyen par exemple d'une graisse silicone et/ou par traitement de l'élément tubulaire 101, ou encore par adjonction d'un lubrifiant dans la matière constituant l'élément tubulaire 101.

Lors de l'utilisation le dispositif selon l'invention est mis en place comme précédemment sur l'un des câbles avant la réalisation de la jonction puis est ramenée sur celle-ci avant de procéder au retrait de l'organe d'entretoisement 2 pour provoquer la rétraction de la partie centrale du manchon 5. Un collier de serrage (non représenté) et alors mis en place pour serrer les extrémités superposées des bandes de tension 109 sur le manchon 5. Dans cette situation le manchon 5 est plaqué sur le film 107 qui est maintenu fixé le long de son bord de fixation 112. La force axiale exercée sur les éléments tubulaires 101 par la partie centrale rétractée du manchon 5 n'est pas suffisante pour provoquer un déchirement du film de sorte que les éléments tubulaires 101 sont maintenus engagés dans le manchon 5. Une traction est exercée sur le filin de déchirement 113. Cette traction provoque une mise en appui du point de rebroussement 114 sur le bord du film et entraîne le déchirement de celui-ci tout autour de l'élément tubulaire 101 avec un déplacement progressif du point de rebroussement 114 comme indiqué par une flèche en trait épais sur la figure 5.

Le film 107 est alors libéré et glisse le long de l'élément tubulaire 101 tout en se repliant le long du bord interne de l'élément tubulaire sous l'effet de la traction exercée par les organes de tension 109. Sous l'effet des différentes forces exercées, c'est-à-dire la poussée exercée par le manchon 5 et la traction exercée par les organes de tension 109, l'élément tubulaire 101 est progressivement éjecté du manchon. A ce propos on notera que la partie arrière de faible conicité s'étend sur la plus grande partie de la longueur de l'élément tubulaire de façon à favoriser une extraction de l'élément tubulaire sans augmenter de façon indue l'encombrement de l'élément tubulaire. La forte conicité de la partie avant sert à donner une forte composante axiale à la force exercée sur l'élément tubulaire 101 par la rétraction de la partie centrale du manchon élastique 5.

En fin d'extraction il peut être souhaitable de tirer manuellement sur l'élément tubulaire 101 afin de favoriser son retrait complet.

Après extraction l'élément tubulaire peut être démonté en séparant les deux demi-coquilles 101.1 et 101.2. Il est également possible de remettre l'élément tubulaire en place par dessus le manchon élastique 5, de préférence après retournement de chaque élément tubulaire 101 afin que les parties de plus grand diamètre soient adjacentes l'une à l'autre et coïncident avec la partie centrale de la jonction. Les éléments tubulaires ainsi repositionnés et maintenus en place par un adhésif ou par des bagues ou des colliers de maintien rapportés, assurent une protection mécanique du manchon élastique, en particulier dans le cas d'un câble enterré à même le sol.

L'invention n'est pas limitée aux modes particuliers de réalisation qui viennent d'être décrits, mais bien au contraire entend couvrir toute variante qui entre dans le cadre de l'invention tel que défini par les revendications.

En particulier, bien que l'on ait illustré l'organe d'entretoisement tubulaire amovible comme étant sous forme d'une bande pouvant se dérouler, on pourra utiliser tout autre type d'organe d'entretoisement tubulaire amovible, comme une simple bague pouvant coulisser intérieurement dans l'un des cônes.

Bien que l'on ait illustré les éléments tubulaires rigides de l'organe de maintien comme étant des cônes, l'invention s'applique également à un dispositif équipé d'éléments tubulaires cylindriques.

Bien que le dispositif selon l'invention ait été illustré pour maintenir un seul manchon élastique 5 on peut utiliser ce dispositif pour maintenir en expansion plusieurs manchons élastiques superposés qui peuvent ainsi être mis en place en une seule opération de pose.

Bien que l'on ait illustré le second mode de réalisation avec un film fixé à l'élément tubulaire correspondant on pourra prévoir un film libre de coulisser sur l'élément tubulaire, le mouvement d'extraction étant temporairement freiné par tout moyen approprié.

Les organes de tension 109 sous forme de bandes auto-agrippantes peuvent être remplacés par des élastiques s'étendant à l'intérieur des éléments tubulaires et accrochés au bord arrière 111 de chaque élément tubulaire. Dans ce cas il convient toutefois de noter que la force de tension diminue au fur et à mesure du retrait de l'élément tubulaire. Le nombre d'organes de tension n'est pas limité à deux et peut être augmenté si cela s'avère nécessaire pour une tension régulière du film 107.

## Revendications

1. Dispositif de maintien en expansion d'un manchon élastique (5), comportant un organe de maintien disposé à l'intérieur du manchon et formé par deux éléments tubulaires rigides (1 ; 101) coaxiaux, **caractérisé en ce qu'**un organe d'entretoisement tubulaire (2) est disposé entre les deux éléments tubulaires rigides (1 ; 101), l'organe d'entretoisement tubulaire (2) étant amovible par l'intérieur d'au moins un des éléments tubulaires rigides (1 ; 101).

2. Dispositif selon la revendication 1, **caractérisé en ce que** l'organe d'entretoisement tubulaire (2) comporte une bande (3) en hélice dont une portion d'extrémité (4) s'étend à l'intérieur d'un des éléments tubulaires rigides (1).

3. Dispositif selon la revendication 1, **caractérisé en ce que** les éléments tubulaires rigides (1 ; 101) ont une surface extérieure présentant une conicité tournée vers l'organe d'entretoisement tubulaire (2).

4. Dispositif selon la revendication 3, **caractérisé en ce que** chaque élément tubulaire (101) comporte une partie avant (105) de forte conicité et une partie arrière (106) de faible conicité.

5. Dispositif selon la revendication 1, **caractérisé en ce que** chaque élément tubulaire rigide (1 ; 101) est recouvert d'un film (13 ; 107) de matériau à faible coefficient de frottement.

6. Dispositif selon la revendication 5, **caractérisé en ce que** le film (107) est replié à l'intérieur de l'élément tubulaire (101) correspondant et est relié à au moins un organe de tension (109).

7. Dispositif selon la revendication 6, **caractérisé en ce que** l'organe de tension (109) s'étend de l'extérieur du manchon élastique (5).

8. Dispositif selon la revendication 7, **caractérisé en ce que** les organes de tension (109) associés à un élément tubulaire (101) sont respectivement reliés aux organes de tension associés à l'autre élément tubulaire.

9. Dispositif selon la revendication 6, **caractérisé en ce que** le film (107) est fixé sur l'élément tubulaire sur une face externe de celui-ci et le dispositif comporte un organe de déchirement (113) du film, adjacent à un bord de fixation (112) du film.

10. Dispositif selon la revendication 1, **caractérisé en ce que** les éléments tubulaires (101) ont une surface externe rugueuse, et un élément lubrifiant (116) est interposé entre la surface externe des éléments tubulaires (101) et le film (107).

11. Dispositif selon la revendication 1, **caractérisé en ce que** les éléments tubulaires (101) comportent chacun deux demi-coquilles (101.1, 101.2) séparables après mise en place du manchon élastique.

## Claims

1. A holding device for keeping an elastic sleeve (5) expanded, the device comprising a holding member disposed inside a sleeve and formed by two rigid tubular elements (1; 101) in axial alignment, the device being **characterized in that** a tubular holding member (2) is disposed between the two rigid tubular elements (1; 101), the tubular spacer member (2) being removable through the inside of at least one of the rigid tubular elements (1; 101).

2. A device according to claim 1, **characterized in that** the tubular spacer member (2) comprises a helical strip (3) having an end portion (4) extending inside one of the rigid tubular elements (1).

3. A device according to claim 1, **characterized in that** each of the rigid tubular elements (1; 101) has a conical outside surface tapering towards the tubular spacer member (2).

4. A device according to claim 3, **characterized in that** each tubular element (101) has a steeply conical front portion (105) and a slightly conical rear portion (106).

5. A device according to claim 1, **characterized in that** each rigid tubular element (1; 101) is covered in a film (13; 107) of material having a low coefficient of friction.

6. A device according to claim 5, **characterized in that** the film (107) is folded back inside the corresponding tubular element (101) and is connected to at least one tension member (109).

7. A device according to claim 6, **characterized in that** the tension member (109) extends from outside the elastic sleeve (5).

8. A device according to claim 7, **characterized in that** the tension members (109) associated with a tubular element (101) are respectively connected to tension members associated with the other tubular element.

9. A device according to claim 6, **characterized in that** the film (107) is fixed to the tubular element on an outside face thereof and the device has a member (113) for tearing the film, adjacent to a fixing edge (112) of the film.

10. A device according to claim 1, **characterized in that** the tubular elements (101) have rough surfaces, and a lubricating element (116) is interposed between the outside surfaces of the tubular elements (101) and the film (107).

11. A device according to claim 1, **characterized in that** each of the tubular elements (101) comprises two half-shells (101.1, 101.2) that are separable after the elastic sleeve has been put into place.

## Patentansprüche

1. Vorrichtung zum Halten einer elastischen Muffe (5) im aufgeweiteten Zustand, umfassend ein Halteteil, das im Inneren der Muffe angeordnet und aus zwei koaxialen, starren rohrförmigen Elementen (1; 101) gebildet ist, **dadurch gekennzeichnet, daß** ein rohrförmiges Abstandsstück (2) zwischen den beiden starren rohrförmigen Elementen (1; 101) angeordnet ist, wobei das rohrförmige Abstandsstück (2) durch das Innere mindestens eines der starren rohrförmigen Elemente (1; 101) herausnehmbar ist.

2. Vorrichtung nach Anspruch 1, **dadurch gekennzeichnet, daß** das rohrförmige Abstandsstück (2) ein schraubenförmiges Band (3) umfaßt, dessen einer Endabschnitt (4) sich im Inneren eines der starren rohrförmigen Elemente (1) erstreckt.

3. Vorrichtung nach Anspruch 1, **dadurch gekennzeichnet, daß** die starren rohrförmigen Elemente (1, 101) eine Außenfläche haben, die eine zum rohrförmigen Abstandsstück geneigte Konizität aufweist.

4. Vorrichtung nach Anspruch 3, **dadurch gekennzeichnet, daß** jedes rohrförmige Element (101) einen vorderen Teil (105) mit starker Konizität und einen hinteren Teil (106) mit geringer Konizität hat.

5. Vorrichtung nach Anspruch 1, **dadurch gekennzeichnet, daß** jedes starre rohrförmige Element (1; 101) mit einem Film (13; 107) aus einem Material mit niedrigem Reibungskoeffizienten überzogen ist.

6. Vorrichtung nach Anspruch 5, **dadurch gekennzeichnet, daß** der Film (107) im Inneren des entsprechenden rohrförmigen Elements (101) umgeschlagen und mit mindestens einem Spannelement (109) verbunden ist.

7. Vorrichtung nach Anspruch 6, **dadurch gekennzeichnet, daß** sich das Spannelement (109) außerhalb der elastischen Muffe (5) erstreckt.

8. Vorrichtung nach Anspruch 7, **dadurch gekennzeichnet, daß** die Spannelemente (109), die einem rohrförmigen Element (101) zugeordnet sind, jeweils mit den Spannelementen verbunden sind, die dem anderen rohrförmigen Element zugeordnet sind.

9. Vorrichtung nach Anspruch 6, **dadurch gekennzeichnet, daß** der Film (107) an dem rohrförmigen Element an dessen Außenfläche befestigt ist und die Vorrichtung ein Abreißelement (113) zum Abreißen des Films umfaßt, angrenzend an einen Befestigungsrand (112) zur Befestigung des Films.

10. Vorrichtung nach Anspruch 1, **dadurch gekennzeichnet, daß** die rohrförmigen Elemente (101) eine rauhe Außenfläche haben und zwischen der Außenfläche der rohrförmigen Elemente (101) und dem Film (107) ein schmierendes Element (116) angeordnet ist.

11. Vorrichtung nach Anspruch 1, **dadurch gekennzeichnet, daß** die rohrförmigen Elemente (101) jeweils zwei Halbschalen (101.1, 101.2) umfassen, die nach dem Einsetzen der elastischen Muffe getrennt werden können.
